# FASCICULE DE BREVET EUROPEEN

(11) **EP 2 222 774 B1**
(45) Date de publication et mention de la délivrance du brevet: **04.05.2016**
(21) Numéro de dépôt: 08873022.1
(22) Date de dépôt: 18.12.2008
(51) Int. Cl.: C08K 5/00, C08K 5/56, C08K 5/42

(54) **COMPOSITION ORGANOPOLYSILOXANIQUE VULCANISABLE A TEMPERATURE AMBIANTE EN ELASTOMERE ET NOUVEAUX CATALYSEURS DE POLYCONDENSATION D'ORGANOPOLYSILOXANES**
BEI ZIMMERTEMPERATUR ZU EINEM ELASTOMER VULKANISIERBARE ORGANOPOLYSILOXANZUSAMMENSETZUNG SOWIE NEUARTIGE KATALYSATOREN ZUR POLYKONDENSATION VON ORGANOPOLYSILOXANEN
ROOM-TEMPERATURE VULCANISABLE ORGANOPOLYSILOXANE COMPOUND TO GIVE AN ELASTOMER AND NOVEL ORGANOPOLYSILOXANE POLYCONDENSATION CATALYSTS

(30) Priorité: 20.12.2007 FR 0708923
(43) Date de publication de la demande: 01.09.2010
(73) Titulaire: Bluestar Silicones France, 69486 Lyon Cedex 03 (FR)
(72) Inventeur: MALIVERNEY, Christian, F-69690 Saint Julien sur Bibost (FR); SAINT-JALMES, Laurent, F-69390 Vourles (FR)
(74) Mandataire: Mekki, Boualem
(86) Numéro de dépôt international: PCT/FR2008/001770
(87) Numéro de publication internationale: WO 2009/106720

(56) Documents cités:
- EP-A- 0 147 323
- EP-A- 0 903 365

## Description

La présente invention concerne une composition organopolysiloxanique vulcanisable dès la température ambiante en élastomère réticulant par polycondensation et ne contenant pas de catalyseurs à base d'alkylétain qui présentent des problèmes de toxicité.

L'invention concerne aussi de nouveaux catalyseurs de polycondensation dans la chimie des silicones et leurs utilisations comme catalyseurs de la réaction de polycondensation d'organopolysiloxanes.

Les formulations des élastomères réticulant par polycondensation font généralement intervenir une huile silicone, généralement un polydiméthylsiloxane, à terminaisons hydroxylées, éventuellement pré-fonctionnalisées par un silane de façon à présenter des extrémités alcoxy, un réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante (Room Temperature Vulcanisable « RTV ») sont bien connues et sont classées en 2 groupes distincts: les compositions monocomposantes (RTV-1) et les compositions bicomposantes (RTV-2).

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposantes (RTV-1) réticulent quand elles sont explosées à l'humidité de l'air, c'est-à-dire qu'elles ne peuvent réticuler dans un milieu en confmé. Par exemple, les compositions silicones monocomposantes utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs qui sont utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quand aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-2. Les composés les plus utilisés sont les carboxylates d'alkylétain tels que le monooléate de tributyltain ou les dicarboxylates de dialkylétain tels que le dilaurate de dibutylétain, le diacétate de dibutylétain ou le dilaurate de diméthylétain (voir l'ouvrage de Noll "Chemistry and Technology of silicones" page 337, Academic Press, 1968 - 2ème édition ou les brevets EP 147 323 ou EP 235 049).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Les catalyseurs à base de titane, également très employés dans les RTV-1, présentent cependant un inconvénient majeur: ils ont une cinétique plus lente que les catalyseurs à base d'étain. De plus, ces catalyseurs ne sont pas utilisables dans les RTV-2 du fait de problèmes de gélification.

D'autres catalyseurs sont parfois mentionnés comme les catalyseurs à base de zinc, de zirconium ou d'aluminium, mais ils n'ont connus qu'un faible développement industriel en raison de leur médiocre efficacité.

Pour un développement durable, il apparaît donc nécessaire de développer des catalyseurs non toxiques pour la réaction de polycondensation des organopolysiloxanes.

Un autre aspect important pour un catalyseur de la réaction de polycondensation des organopolysiloxanes est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre le catalyseur doit conférer au mélange catalysé un temps d'étalement qui ne varie pas en fonction de la durée au stockage.

L'objectif essentiel de la présente invention est donc de trouver un système catalytique utilisable à la fois dans la réticulation des compositions élastomères mono- et bi-composantes.

Un autre objectif essentiel de la présente invention est de proposer un catalyseur qui continue à répondre à la fois aux contraintes de conservation, de mise en oeuvre et de réticulation des deux types de compositions élastomères mono- et bi-composantes.

Il a maintenant été trouvé, et c'est ce qui constitue l'objet de la présente invention une composition organopolysiloxanique, caractérisée en ce qu'elle comprend d'une part une base silicone B apte à durcir par réaction de polycondensation en un élastomère silicone et d'autre part, une quantité catalytiquement efficace d'au moins un catalyseur de polycondensation qui est un complexe ou sel métallique A de formule (1) suivante:

[M(L¹)ᵣ₁(L²)ᵣ₂(Y)ₓ] **(1)**

dans laquelle:
- r1 ≥ 1, r2≥ 0 et x≥ 0;
- le symbole M représente un métal sélectionné parmi le groupe constitué par: le scandium, l'ytterbium, le cuivre, l'argent et le bismuth,
- le symbole L¹ représente un ligand qui est un anion sulfonate de préférence perfluoroalkylsulfonate et lorsque r1 ≥ 2, les symboles L¹ pouvant être identique ou différent,
- le symbole L² représente un ligand anionique qui est différent de L¹ et lorsque r2 ≥ 2, les symboles L² pouvant être identique ou différent, et
- le symbole Y représente un ligand neutre et lorsque x ≥ 2, les symboles Y pouvant être identique ou différent.

Il est entendu que par "complexe ou sel métallique **A",** cette définition inclut toute forme oligomérique ou analogue dudit complexe ou sel métallique **A**

Il est du mérite des inventeurs d'avoir trouvé, de manière tout à fait surprenante et inattendue, qu'il convient d'utiliser une sélection de certains métaux dont au moins un ligand est un anion sulfonate de préférence perfluoroalkylsulfonate pour obtenir d'excellent catalyseur de la réaction de polycondensation d'organopolysiloxanes.

La définition des ligands est tirée de l'ouvrage « Chimie Organométallique » de Didier Astruc, publié en 2000 par EDP Sciences, Cf. notamment Chapitre 1, « Les complexes monométalliques », pages 31 et suivantes.

La nature du ligand neutre Y importe peu et l'homme du métier utilisera tout type de ligand neutre adapté au métal concerné.

Le catalyseur selon l'invention peut être à l'état solide ou liquide. Il peut être incorporé seul ou dans un solvant approprié. Lorsqu'il est en solvant, une huile silicone peut être additionnée, le solvant est ensuite évaporé de manière à transférer le catalyseur dans un milieu silicone. Le mélange obtenu sert de base catalysante.

Selon un mode de réalisation préféré, le catalyseur de polycondensation selon l'invention est un complexe ou sel métallique **A** de formule **(1')** suivante:

[M(L¹)ᵣ₁(L²)ᵣ₂] **(1')**

dans laquelle:
- r1 ≥ 1, et r2 ≥ 0;
- le symbole M représente un métal sélectionné parmi le groupe constitué par: le scandium, l'ytterbium, le cuivre, l'argent et le bismuth,
- le symbole L¹ représente un ligand qui est un anion sulfonate de préférence perfluoroalkylsulfonate et lorsque r1 ≥ 2, les symboles L¹ pouvant être identique ou différent, et
- le symbole L² représente un ligand anionique qui est différent de L¹ et lorsque r2 ≥ 2, les symboles L² pouvant être identique ou différent.

Selon un mode de réalisation préféré, le catalyseur de polycondensation selon l'invention est un complexe ou sel métallique A choisi parmi le groupe constitué par les complexes de formules **(2)** à **(6)** suivantes:

**(2):** [Sc(L¹)ᵣ₃(L²)ᵣ₄] ;

avec r3 ≥ 1 et r4≥ 0 et r3+r4=3,

**(3):** [Yb(L¹)ᵣ₅(L²)ᵣ₆]

avec r5≥ 1 et r6≥ 0 et r5+r6=3,

**(4):** [Cu(L¹)ᵣ₇(L²)ᵣ₈]

avec r7 ≥ 1 et r8 ≥ 0 et r7+r8=2,

**(5):** [Ag(L¹)];

**(6):** [Bi(L¹)ᵣ₉(L²)ᵣ₁₀] ;

avec r9 ≥ 1 et r10 ≥ 0 et r9+r10=3, dans lesquelles:
- le symbole L¹ représente un ligand qui est un anion sulfonate de préférence perfluoroalkylsulfonate et lorsque l₁ ≥ 2, les symboles L¹ pouvant être identique ou différent, et
- le symbole L² représente un ligand anionique différent de L¹ et lorsque le nombre de ligand L²≥ 2, les symboles L² pouvant être identique ou différent.

Pour la réalisation de l'invention, comme catalyseur de polycondensation selon l'invention, on utilise de préférence un complexe ou sel métallique **A** choisi parmi le groupe constitué par les complexes **(7)** à **(11)** suivants:

**(7):** [Sc (triflate)₃],

**(8):** [Yb (triflate)₃] ,

**(9):** [Cu (triflate)₂] ,

**(10):** [Ag (triflate)], et

**(11):** [Bi (triflate)₃].

Il est à noter qu'au moins une partie du caractère inventif de l'invention, tient à la sélection judicieuse et avantageuse des associations délimitées de complexes ou sels métalliques **A** utilisés à titre de catalyseur de polycondensation.

Pour détailler un peu plus la nature des éléments constitutifs du complexe ou sel métallique **A** selon l'invention, il importe de préciser que L² est un ligand anionique qui peut être sélectionné dans le groupe constitué par les anions: fluoro (F), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Selon un mode de réalisation particulièrement préféré, L² est un ligand anionique sélectionné dans le groupe constitué par les anions: acétate, le propionate, le butyrate, isobutyrate, diéthylacétate, benzoate, 2-éthylhexanoate, stéarate, le méthoxyde, l'éthoxyde, l'isopropoxyde, le tert-butoxyde, le tert-pentoxyde, le 8-hydroxyquinolinate, le naphténate le tropolonate et l'anion oxo O²⁻.

Un autre objet de l'invention consiste en l'utilisation comme catalyseur de la réaction de polycondensation d'organopolysiloxanes des complexes ou sels métalliques **A** selon l'invention tels que décrits ci-dessus.

Un autre objet de l'invention consiste en l'utilisation comme catalyseur de la réaction de polycondensation des composés choisi parmi le groupe constitué par les complexes de formules **(5)** à **(9):**

**(5):** [Sc (triflate)₃],

**(6):** [Yb (triflate)₃,]

**(7):** [Cu (triflate)₂],

**(8):** [Ag (triflate)], et

**(9):** [Bi (triflate)₃].

La quantité du catalyseur de polycondensation selon l'invention (complexe métallique **A**) est comprise entre 0,1 et 10 % en poids de la masse totale, de préférence entre 0,5 et 5 %, que ce soit une préparation mono ou bicomposant.

### Description de la base silicone B:

Les bases silicone utilisées dans la présente invention réticulant et durcissant par des réactions de polycondensation sont bien connues. Ces bases sont décrites en détail en particulier dans de nombreux brevets et elles sont disponibles dans le commerce.

Ces bases silicones peuvent être mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes peuvent être utilisées des bases bi-composantes, c'est-à-dire conditionnées en deux emballages, qui durcissent dès l'incorporation du catalyseur de polycondensation selon l'invention (complexe ou sel métallique **A**). Elles sont conditionnées après incorporation du catalyseur en deux fractions séparées, l'une des fractions pouvant ne renfermer par exemple que le catalyseur selon l'invention ou un mélange avec l'agent réticulant.

La base silicone **B** utilisée pour réaliser la composition selon l'invention peut comprendre:
- au moins une huile polyorganosiloxane **C** susceptible de réticuler par polycondensation en un élastomère;
- éventuellement au moins un agent de réticulation **D;**
- éventuellement au moins un promoteur d'adhérence **E;** et
- éventuellement au moins une charge minérale siliceuse, organique et/ou non siliceuse **F.**

L'huile polyorganosiloxane **C** est de préférence un polymère α,ω-dihydroxypolydiorganosiloxane, de viscosité comprise entre 50 et 5 000 000 mPa.s à 25°C et agent de réticulation **D** est de préférence un composé organosilicié portant plus de deux groupes hydrolysables liés aux atomes de silicium par molécule. L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables.

Comme agent de réticulation **(D)** on peut citer :
- les silanes de formule générale suivante :

   R¹ₖSi(OR²)₍₄₋ₖ₎

   dans laquelle les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2 ; et
- les produits d'hydrolyse partielle de ce silane.

Comme exemple de radicaux alcoxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Le symbole R¹ représente un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriéthoxysilane,
- le méthyltriéthoxysilane,
- le vinyltriéthoxysilane,
- le propyltriéthoxysilane,
- le tétraéthoxysilane,
- le tétrapropoxysilane,
- le 1,2-bis(triméthoxysilyl)éthane,
- le 1,2-bis(triéthoxysilyl)éthane, et
- le tétraisopropoxysilane,
ou encore: CH₃Si(OCH₃)₃ ; C₂H₅Si(OC₂H₅)₃ ; C₂H₅Si(OCH₃)₃ CH2=CHSi(OCH₃)₃; CH₂=CHSi(OCH₂CH₂OCH₃)₃ C₆H₅Si(OCH₃)₃ ; [CH₃][OCH(CH₃)CH₂OCH₃]Si[OCH₃]₂ Si(OCH₃)₄ ; Si(OC₂H₅)₄; Si(OCH₂CH₂CH₃)₄; Si(OCH₂CH₂CH₂CH₃)₄ Si(OC₂H₄OCH₃)₄ ; CH₃Si(OC₂H₄OCH₃)₃ ; CICH₂Si(OC₂H₅)₃ ;

Comme autres exemples d'agent de réticulation **D,** on peut citer le polysilicate d'éthyle, ou le polysilicate de n-propyle.

On utilise généralement de 0,1 à 60 parties en poids d'agent de réticulation **D** pour 100 parties en poids de polyorganosiloxane **C** susceptible de réticuler par polycondensation en un élastomère.

Ainsi la composition selon l'invention peut comprendre au moins un promoteur d'adhérence **E** tel que par exemple les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃,
   [H₂N(CH₂)₃]Si(OCH₃)₃
   [H₂N(CH₂)₃]Si(OC₂H₅)₃
   [H₂N(CH₂)₄]Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH₃)₃
   [H₂N(CH₂)₂NH(CH₂)₃]Si(OCH2CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 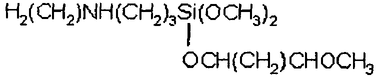 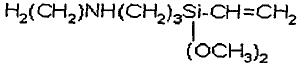
   ou des oligomères polyorganosiloxaniques contenant de tels groupes organiques à une teneur supérieure à 20%.

Pour les bases mono- et bi-composantes, on utilise comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g.

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane **C** susceptible de réticuler par polycondensation en un élastomère ;
- 0 à 20 parties d'un agent de réticulation **D;**
- 0 à 20 parties d'un promoteur d'adhérence **E;** et
- 0 à 50 parties de charge **F.**

Outre les constituants principaux, des polymères polyorganosiloxanes linéaires non réactif **G** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **G** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile polyorganosiloxane **C** susceptible de réticuler par polycondensation.

Les compositions selon l'invention peuvent en outre avantageusement comprendre au moins une résine silicone **H.** Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R"'₂SiO_{2/2} (motif D), R"'SiO_{3/2} (motif T) et SiO_{4/2} (motif Q). Les radicaux R'" sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction. Ainsi il est possible de mélanger tout d'abord les huiles organopolysiloxanes **C** et les charges **F** et d'ajouter ensuite à l'empâtage obtenu les réticulants **D,** les composés **E** et le catalyseur selon l'invention. Il est également possible de mélanger les huiles **C,** les réticulants **D,** les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles.

Les compositions mono-composantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

La fabrication des compositions bi-composantes conformes à invention s'effectue également par mélange des divers constituants dans des appareils appropriés. Pour obtenir des compositions homogènes, il est préférable de mélanger tout d'abord les polymères **A** avec les charges **C ;** l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Les compositions conformes à l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments de maçonnerie), l'isolation de conducteurs électriques, l'enrobage de circuits électroniques et la préparation de moules servant à la fabrication d'objets en résines ou mousses synthétiques.

Ainsi, un autre objet de l'invention consiste en un système bicomposant précurseur de la composition organopolysiloxanique selon l'invention et telle que définie ci-dessus et vulcanisable en élastomère silicone par des réactions de polycondensation et caractérisé en ce qu'il se présente en deux parties **P1** et **P2** distinctes destinées à être mélangées pour former ladite composition, et en ce que l'une de ces parties comprend le complexe ou sel métallique **A** selon l'invention et tel que défini ci-dessus comme catalyseur de la réaction de polycondensation d'organopolysiloxanes et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère,
- de 0.001 à 10 partie(s) en poids d'eau.

Un autre objet de l'invention consiste aussi en une composition polyorganosiloxanique monocomposant stable au stockage en l'absence d'humidité et réticulant, en présence d'eau, en élastomère, caractérisée en ce qu'elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- un catalyseur de la réaction de polycondensation qui est le complexe métallique A selon l'invention et tel que défini ci-dessus.

Des bases mono-composantes sont décrites en détail par exemple dans les brevets EP 141 685, EP 147 323, EP 102 268, EP 21 859, FR 2 121 289 et FR 2 121 631, cités en référence.

A ces bases mono-composantes peuvent être ajoutés des promoteurs d'adhérence **E** choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Des bases bi-composantes sont décrites en détail par exemple dans les brevets EP 118 325, EP 117 772, EP 10 478, EP 50 358, EP 184 966, US 3 801 572 et US 3 888 815, cités comme référence.

Un autre objet de l'invention consiste en l'utilisation d'un complexe ou sel métallique **A** selon l'invention et tel que défini ci-dessus comme catalyseur de la réaction de polycondensation d'organopolysiloxanes

Le dernier objet selon l'invention consiste en un élastomère obtenu par réticulation et durcissement du système bi-composant selon l'invention et tel que décrit ci-dessus, ou de la composition selon l'invention et telle que décrite ci-dessus.

D'autres avantages et caractéristiques de la présente invention apparaîtront à la lecture des exemples suivants donnés à titre illustratif nullement limitatif.

### EXEMPLES:

### Exemple 1 : Test initial

Afin de mettre en évidence l'activité catalytique de nouvelles molécules, deux tests simples ont été mis au point :

Dans les 2 tests, on procède de la façon suivante :
- L'huile fonctionnalisée ou non, puis le catalyseur, puis le réticulant dans le cas du RTV2, puis éventuellement l'eau sont placés successivement dans un petit récipient cylindrique ouvert muni d'un barreau magnétique, et l'agitation est fixée à 300 tours/min. On mesure le temps de l'arrêt de l'agitation qui correspond à une viscosité de 1000 cP (ou mPa) environ, puis le temps où l'huile ne coule plus, le temps de formation d'une peau non collante et le temps de réticulation à coeur. L'activité de nouveaux catalyseurs est comparée à celle du dilaurate de tétra butyldistannoxane ou Tegokat 225 l'un des plus rapides catalyseurs de type dialkylétain (1.24 mMol en équivalent Sn).

### - Test dit RTV2 :

L'espèce à tester est mise en contact avec une huile polydiméthylsiloxanique α,ω-dihydroxylée courte (½ équivalent par rapport à la teneur en OH, de viscosité 100 mPa.s, huile 48V100) puis un réticulant, le silicate d'éthyle est ajouté (1 équivalent /OH), ou le même volume de silicate d'éthyle dit « avancé », c'est-à-dire un mélange d'éthoxypolysiloxanes (dans ce cas > 1éq/OH).

Les quantités utilisées dans les exemples ci-dessous sauf mention sont les suivantes :
- 4.48 g d'huile 48V100 à 0.553 mMol OH/g (viscosité 100 cP ou mPa)
- 1.24 mMol d'espèce à tester (1/2 éq./OH)
- 0.52 g de silicate d'éthyle (1 éq./OH) en présence ou non de 90 µl d'eau (2 éq./OH), ou le même volume de silicate « avancé » que le silicate d'éthyle (= 0.82 g)

- **Test dit RTV1 :** la même huile utilisée précédemment est fonctionnalisée préalablement par le vinyltriméthoxysilane (VTMO) ; l'espèce à tester est mise en contact avec cette huile dans les mêmes conditions que précédemment, puis 2 équivalents d'eau sont ajoutés (2 éq./OH initiaux).

Les quantités utilisées dans les exemples ci-dessous sauf mention sont les suivantes :
- 4.77 g d'huile 48V100 fonctionnalisée VTMO,
- 1.24 mMol d'espèce à tester (1/2 éq./OH)
- 90 µl d'eau (ajoutés après 1 min d'agitation = t₀).

Les résultats du test RTV1 sont indiqués dans le tableau I ci-dessous :

**Tableau I: Test RTV1**

| **n° essai** | métal | catalyseur | Temps arrêt agitation (h:min) | Temps fin coulabilité (h:min) | Temps touché non collant (h:m in) | Temps réticulation (h:min) | Dur/mou après 24h |
|---|---|---|---|---|---|---|---|
| **Comparatif** | **Sn** | Tegokat225 | 00:19 | 00:22 | 00:25 | 00:34 | dur |
| **1** | **Ag** | Ag(triflate) | 01:50 | 03:01 | 04:00 | 04:00 | dur |
| **2** | **Bi** | Bi(triflate)3, H2O | 00:12 | 00:12 | 00:12 | 00:12 | dur |
| **3** | **Cu** | Cu(triflate)2 | entre 7 et 24 heures | entre 7 et 24 heures | entre 7 et 24 heures | entre 7 et 24 heures | dur |
| **4** | **Sc** | Sc(triflate)3 | 03:00 | 03:00 | 04:00 | 03:50 | dur |
| **5** | **Yb** | Yb(triflate)3 | 02:20 | 03:50 | entre 7 et 24 he ures | entre 7 et 24 heures | dur |

Les résultats du test RTV2 (réticulant silicate d'éthyle) sont indiqués dans le tableau II ci-dessous :

**Tableau II: Tests RTV2**

| **n° essai** | métal | catalyseur | Temps arrêt agitation (h:min) | Temps fin coulabilité (h:min) | Temps touché non collant (h:min) | Temps réticulation (h:min) | Dur/mou après 24h |
|---|---|---|---|---|---|---|---|
| **Comparatif** | **Sn** | Tegokat225 | 00:20 | 00:30 | 00:42 | 00:42 | dur |
| **1** | **Ag** | Ag(triflate) | 06:00 | 06:30 | entre 7 et 24 h | entre 7 et 24 h | dur |
| **2** | **Bi** | Bi(triflate)3, H2O | 00:02 | 00:03 | 05:00 | 01:30 | dur |
| **3** | **Cu** | Cu(triflate)2 | 00:55 | - | - | 7jrs | gel collant |
| **4** | **Sc** | Sc(triflate)3 | 03:45 | entre 7 et 24 h | entre 7 et 24 h | entre 7 et 24 h | dur |
| **5** | **Yb** | Yb(triflate)3 | 00:22 | 05:30 | entre 7 et 24 h | entre 7 et 24 h | dur |

### Exemple 3: Test en empâtage pour RTV1

Dans un second temps, certains catalyseurs sont aussi testés dans des systèmes plus proches appelés "empâtages".

En **RTV1,** l'empâtage utilisé est préparé comme suit : à un mélange de 3464 g d'une huile α,ω-dihydroxylée de viscosité de 20000 centipoises contenant 0.066% d'OH, et de 120 g de vinyltriméthoxysilane sous agitation est ajouté 16 g d'une solution de lithine à 2 % en poids dans le méthanol, puis après 5 min 400 g de silice de pyrogénation AE55 sont ajoutés. Le mélange est dévolatilisé sous vide puis stocké à l'abri de l'humidité.

Pour chaque test, le catalyseur testé est mélangé à 50 g de cet empâtage, puis le potentiel catalytique est évalué de 3 façons :
- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans des conditions régulées (23°C et 50% d'humidité relative) et sur des temps croissants (2, 3, 7 et 14 jours).
Nota : La dureté Shore est mesurée sur un cordon de 6 mm. Dans le tableau de résultat, le symbole « > » correspond aux valeurs de dureté mesurées sur la partie supérieure du cordon et le symbole «<» correspond aux valeurs de dureté mesurées sur la partie inférieure du cordon, moins exposée à l'air ambiant que la partie supérieure.

Différents catalyseurs selon l'invention ont été testés.
A titre comparatif, comme précédemment, ont été également testés:
- un catalyseur à base d'étain: le dilaurate de dibutylétain (DLDBE).
Les résultats sont indiqués dans le tableau III ci-dessous:Test en empâtage

**Tableau III : Test en empâtage**

| **Produit** | **solvant** | **% poids** | **TFP baton** | **Toucher collant** | **Dureté Shore A sur 6mm** | | | | |
|---|---|---|---|---|---|---|---|---|---|
| | | | **min** | **à 48h** | **2J > <** | **3J > <** | **5J > <** | **7J > <** | **14J > <** |
| DLDBE | / | 0,9 | 10 | non | 3222 | | 3430 | 3229 | |
| Bi(triflate)3 | 50% dans isopropanol | 0,9 | 6 | non | 1618 | 2223 | | 2223 | 2527 |

## Revendications

1. Composition organopolysiloxanique, **caractérisée en ce qu'**elle comprend d'une part une base silicone **B** apte à durcir par réaction de polycondensation en un élastomère silicone et d'autre part, une quantité catalytiquement efficace d'au moins un catalyseur de polycondensation qui est un complexe ou sel métallique **A** de formule **(1)** suivante:
[M(L¹)ᵣ₁(L²)ᵣ₂(Y)ₓ] (1)
dans laquelle:
- r1 ≥ 1, r2≥ 0 et x≥ 0 ;
- le symbole M représente un métal sélectionné parmi le groupe constitué par: le scandium, l'ytterbium, le cuivre, l'argent et le bismuth,
- le symbole L¹ représente un ligand qui est un anion sulfonate de préférence perfluoroalkylsulfonate et lorsque r1 ≥ 2, les symboles L¹ pouvant être identique ou différent,
- le symbole L² représente un ligand anionique qui est différent de L¹ et lorsque r2 ≥ 2, les symboles L² pouvant être identique ou différent, et
- le symbole Y représente un ligand neutre et lorsque x ≥ 2, les symboles Y pouvant être identique ou différent.

2. Composition organopolysiloxanique selon la revendication 1, caractérisée en ce complexe ou sel métallique **A** de formule **(1')** suivante:
[M(L¹)ᵣ₁(L²)ᵣ₂] **(1')**
dans laquelle:
- r1 ≥ 1, et r2 ≥ 0;
- le symbole M représente un métal sélectionné parmi le groupe constitué par: le scandium, l'ytterbium, le cuivre, l'argent et le bismuth,
- le symbole L¹ représente un ligand qui est un anion sulfonate de préférence perfluoroalkylsulfonate et lorsque r1 ≥ 2, les symboles L¹ pouvant être identique ou différent, et
- le symbole L² représente un ligand anionique qui est différent de L¹ et lorsque r2 ≥ 2, les symboles L² pouvant être identique ou différent.

3. Composition organopolysiloxanique selon l'une quelconque des revendications précédentes, **caractérisée en ce qu'**elle comprend d'une part une base silicone **B** apte à durcir par réaction de polycondensation en un élastomère silicone et d'autre part, une quantité catalytiquement efficace d'au moins un catalyseur de polycondensation qui est un complexe ou sel métallique **A** choisi parmi le groupe constitué par les complexes de formules **(2)** à **(6)** suivantes:
**(2):** [Sc (L¹)ᵣ₃(L²)ᵣ₄] ;
avec r3 ≥ 1 et r4≥ 0 et r3+r4=3,
**(3):** [Yb (L¹)ᵣ₅ (L²)ᵣ₆] ;
avec r5≥ 1 et r6≥ 0 et r5+r6=3,
**(4):** [Cu (L¹)ᵣ₇ (L²)ᵣ₈] ;
avec r7 ≥ 1 et r8 ≥ 0 et r7+r8=2,
**(5):** [Ag(L¹)];
**(6):** [Bi (L¹)ᵣ₉ (L²)ᵣ₁₀] ;
avec r9 ≥ 1 et r10 ≥ 0 et r9+rl 0=3, dans lesquelles:
- le symbole L¹ représente un ligand qui est un anion sulfonate de préférence perfluoroalkylsulfonate et lorsque l₁] ≥ 2, les symboles L¹ pouvant être identique ou différent, et
- le symbole L² représente un ligand anionique différent de L¹ et lorsque le nombre de ligand L²≥ 2, les symboles L² pouvant être identique ou différent.

4. Composition organopolysiloxanique selon l'une quelconque des revendications précédentes **caractérisée en ce qu'**elle comprend d'une part une base silicone **B** apte à durcir par réaction de polycondensation en un élastomère silicone et d'autre part, une quantité catalytiquement efficace d'au moins un catalyseur de polycondensation qui est un complexe ou sel métallique **A** choisi parmi le groupe constitué par les complexes **(7)** à **(11)** suivants:
**(7):** [Sc (triflate)₃],
**(8):** [Yb (triflate)₃],
**(9):** [Cu (triflate)₂],
**(10):** [Ag (triflate)], et
**(11):** [Bi (triflate)₃].

5. Composition organopolysiloxanique selon l'une quelconque des revendications prédédentes **caractérisée en ce que** L² est un ligand anionique sélectionné dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

6. Composition organopolysiloxanique selon la revendication 1, 2 ou 3 **caractérisée en ce que** L² est un ligand anionique sélectionné dans le groupe constitué par les anions: l'acétate, le propionate, le butyrate, isobutyrate, diéthylacétate, benzoate, 2-éthylhexanoate, stéarate, le méthoxyde, l'éthoxyde, l'isopropoxyde, le tert-butoxyde, le tert-pentoxyde, le 8-hydroxyquinolinate, le naphténate le tropolonate et l'anion oxo O²⁻.

7. Composition selon l'une quelconque des revendications précédentes, **caractérisée en ce qu'**elle comprend outre une quantité catalytiquement efficace d'au moins un catalyseur de polycondensation qui est un complexe ou se1 métallique **A** tel que défini selon l'une quelconque des revendications 1 à 6 et une base silicone **B** comprenant:
- au moins une huile polyorganosiloxane **C** susceptible de réticuler par polycondensation en un élastomère;
- éventuellement au moins un agent de réticulation **D;**
- éventuellement au moins un promoteur d'adhérence **E;** et
- éventuellement au moins une charge minérale siliceuse, organique et/ou non siliceuse **F.**

8. Système bicomposant précurseur de la composition organopolysiloxanique telle que définie selon l'une quelconque des revendications 1 à 7 et vulcanisable en élastomère silicone par des réactions de polycondensation et **caractérisé en ce qu'**il se présente en deux parties **P1** et **P2** distinctes destinées à être mélangées pour former ladite composition, et **en ce que** l'une de ces parties comprend le complexe ou sel métallique **A** tel que défini selon l'une quelconque des revendications 1 à 6 comme catalyseur de la réaction de polycondensation d'organopolysiloxanes et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère,
- de 0.001 à 10 partie(s) en poids d'eau.

9. Composition polyorganosiloxanique monocomposant stable au stockage en l'absence d'humidité et réticulant, en présence d'eau, en élastomère, **caractérisée en ce qu'**elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- un catalyseur de la réaction de polycondensation qui est le complexe ou sel métallique **A** tel que défini selon l'une quelconque des revendications 1 à 6.

10. Elastomère obtenu par réticulation et durcissement du système bi-composant selon la revendication 8 ou de la composition telle que définie selon l'une quelconque des revendications 1 à 7 ou 9.

11. Utilisation d'un complexe ou sel métallique **A** tel que défini selon l'une quelconque des revendications 1 à 6 comme catalyseur de la réaction de polycondensation d'organopolysiloxanes.

## Patentansprüche

1. Organopolysiloxanzusammensetzung, **dadurch gekennzeichnet, dass** sie einerseits eine Silikonbasis **B,** die durch Polykondensationsreaktion zu einem Silikonelastomer gehärtet werden kann, und andererseits eine katalytisch wirksame Menge mindestens eines Polykondensationskatalysators, bei dem es sich um einen Metallkomplex oder ein Metallsalz **A** der folgenden Formel **(1)** handelt:
[M (L¹)ᵣ₁ (L²)ᵣ₂ (Y)ₓ] **(1)**
worin:
- r1 ≥ 1, r2 ≥ 0 und x ≥ 0;
- das Symbol M für ein Metall aus der Gruppe bestehend aus Scandium, Ytterbium, Kupfer, Silber und Bismut steht,
- das Symbol L¹ für einen Liganden steht, bei dem es sich um ein Sulfonat-Anion, vorzugsweise ein Perfluoralkyl-Sulfonat-Anion, handelt, und dann, wenn r1 ≥ 2, die Symbole L¹ gleich oder verschieden sein können,
- das Symbol L² für einen anionischen Liganden steht, der von L¹ verschieden ist, und dann, wenn r2 ≥ 2, die Symbole L² gleich oder verschieden sein können, und
- das Symbol Y für einen neutralen Liganden steht und dann, wenn x ≥ 2, die Symbole Y gleich oder verschieden sein können,
umfasst.

2. Organopolysiloxanzusammensetzung nach Anspruch 1, **dadurch gekennzeichnet, dass** Metallkomplex oder ein Metallsalz **A** der folgenden Formel **(1'):**
[M (L¹)ᵣ₁ (L²)ᵣ₂] **(1')**
worin:
- r1 ≥ 1 und r2 ≥ 0;
- das Symbol M für ein Metall aus der Gruppe bestehend aus Scandium, Ytterbium, Kupfer, Silber und Bismut steht,
- das Symbol L¹ für einen Liganden steht, bei dem es sich um ein Sulfonat-Anion, vorzugsweise ein Perfluoralkylsulfonat-Anion, handelt, und dann, wenn r1 ≥ 2, die Symbole L¹ gleich oder verschieden sein können, und
- das Symbol L² für einen anionischen Liganden steht, der von L¹ verschieden ist, und dann, wenn r2 ≥ 2, die Symbole L² gleich oder verschieden sein können.

3. Organopolysiloxanzusammensetzung nach einem der vorhergehenden Ansprüche, **dadurch gekennzeichnet, dass** sie einerseits eine Silikonbasis **B,** die durch Polykondensationsreaktion zu einem Silikonelastomer gehärtet werden kann, und andererseits eine katalytisch wirksame Menge mindestens eines Polykondensationskatalysators, bei dem es sich um einen Metallkomplex oder ein Metallsalz **A** handelt, der bzw. das aus der Gruppe bestehend aus den Komplexen der folgenden Formeln **(2)** bis **(6)** ausgewählt ist, umfasst:
**(2):** [Sc (L¹)ᵣ₃ (L²)ᵣ₄]
mit r3 ≥ 1 und r4 ≥ 0 und r3 + r4 = 3;
**(3):** [Yb (L¹)ᵣ₅ (L²)ᵣ₆]
mit r5 ≥ 1 und r6 ≥ 0 und r5 + r6 = 3;
**(4):** [Cu(L¹)ᵣ₇ (L²)ᵣ₈]
mit r7 ≥ 1 und r8 ≥ 0 und r7+ r8 = 2;
**(5) :** [Ag(L¹)] ;
**(6):** [Bi(L¹)ᵣ₉(L²)ᵣ₁₀]
mit r9 ≥ 1 und r10 ≥ 0 und r9 + r10 = 3; worin:
- das Symbol L¹ für einen Liganden steht, bei dem es sich um ein Sulfonat-Anion, vorzugsweise ein Perfluoralkylsulfonat-Anion, handelt, und dann, wenn l₁ ≥ 2, die Symbole L¹ gleich oder verschieden sein können, und
- das Symbol L² für einen anionischen Liganden, der von L¹ verschieden ist, steht, und dann, wenn die Zahl der Liganden L² ≥ 2, die Symbole L² gleich oder verschieden sein können.

4. Organopolysiloxanzusammensetzung nach einem der vorhergehenden Ansprüche, **dadurch gekennzeichnet, dass** sie einerseits eine Silikonbasis **B,** die durch Polykondensationsreaktion zu einem Silikonelastomer gehärtet werden kann, und andererseits eine katalytisch wirksame Menge mindestens eines Polykondensationskatalysators, bei dem es sich um einen Metallkomplex oder ein Metallsalz **A** handelt, der bzw. das aus der Gruppe bestehend aus den folgenden Komplexen **(7)** bis **(11)** ausgewählt ist, umfasst:
**(7):** [Sc (Triflat)₃] ;
**(8) :** [Yb(Triflat)₃] ;
**(9):** [Cu(Triflat)₂] ;
**(10):** [Ag(Triflat)];
und
**(11):** [Bi(Triflat)₃]

5. Organopolysiloxanzusammensetzung nach einem der vorhergehenden Ansprüche, **dadurch gekennzeichnet, dass** es sich bei L² um einen anionischen Liganden handelt, der aus der Gruppe der folgenden Anionen ausgewählt ist: Fluoro (F⁻), Chloro (Cl⁻), Triiodo (1-) (I₃)⁻, Difluorchlorato (1⁻) [ClF₂]⁻, Hexafluoriodato (1⁻) [IF₆]⁻, Oxochlorato (1⁻) (ClO)⁻, Dioxochlorato (1⁻) (ClO₂)⁻, Trioxochlorato (1⁻) (ClO₃)⁻, Tetraoxochlorato (1⁻) (CIO₄)⁻, Hydroxo (OH)⁻, Mercapto (SH)⁻, Selanido (SeH)⁻, Hyperoxo (O₂)⁻, Ozonido (O₃)⁻, Hydroxo (OH-), Hydrodisulfido (HS₂)⁻, Methoxo (CH₃O)⁻, Ethoxo (C₂H₅O)⁻, Propoxido (C₃H₇O)⁻, Methylthio (CH₃S)⁻, Ethanthiolato (C₂H₅S)⁻, 2-Chlorethanolato (C₂H₄ClO)⁻, Phenoxido (C₆H₅O)⁻, Phenylthio (C₆H₅S)⁻, 4-Nitrophenolato [C₆H₄(NO₂)O]⁻, Formiato (HCO₂)⁻, Acetato (CH₃CO₂)⁻, Propionato (CH₃CH₂CO₂)⁻, Nitrido (N₃)⁻, Cyano (CN)⁻, Cyanato (NCO)⁻, Thiocyanato (NCS)⁻, Selenocyanato (NCSe)⁻, Amido (NH₂)⁻, Phosphino (PH₂)⁻, Chlorazanido (ClHN)⁻, Dichlorazanido (Cl₂N)⁻, [Methanaminato (1⁻)] (CH₃NH)⁻, Diazenido (HN=N)⁻, Diazanido (H₂N-NH)⁻, Diphosphenido (HP=P)⁻, Phosphonito (H₂PO)⁻, Phosphinato (H₂PO₂)⁻, Carboxylato, Enolato, Amiden, Alkylato und Arylato.

6. Organopolysiloxanzusammensetzung nach Anspruch 1, 2 oder 3, **dadurch gekennzeichnet, dass** es sich bei L² um einen anionischen Liganden handelt, der aus der Gruppe der folgenden Anionen ausgewählt ist: Acetat, Propionat, Butyrat, Isobutyrat, Diethylacetat, Benzoat, 2-Ethylhexanoat, Stearat, Methoxid, Ethoxid, Isopropoxid, tert.-Butoxid, tert.-Pentoxid, 8-Hydroxychinolinat, Naphthenat, Tropolonat und dem Oxo-Anion O²⁻.

7. Zusammensetzung nach einem der vorhergehenden Ansprüche, **dadurch gekennzeichnet, dass** sie außerdem eine katalytisch wirksame Menge mindestens eines Polykondensationskatalysators, bei dem es sich um einen Metallkomplex oder ein Metallsalz **A** gemäß einem der Ansprüche 1 bis 6 handelt, und eine Silikonbasis **B,** umfassend:
- mindestens ein Polyorganosiloxanöl **C,** das durch Polykondensation zu einem Elastomer vernetzt werden kann;
- gegebenenfalls mindestens ein Vernetzungsmittel **D;**
- gegebenenfalls mindestens einen Haftvermittler **E** und
- gegebenenfalls mindestens einen siliciumhaltigen, organischen und/oder nicht siliciumhaltigen mineralischen Füllstoff **F,**
umfasst.

8. Zweikomponentensystem, das einen Vorläufer für die Organopolysiloxanzusammensetzung gemäß einem der Ansprüche 1 bis 7 darstellt und durch Polykondensationsreaktionen zu einem Silikonelastomer vulkanisierbar ist und **dadurch gekennzeichnet ist, dass** es zwei verschiedene Teile **P1** und **P2,** die zum Mischen zur Bildung der Zusammensetzung vorgesehen sind, aufweist und einer dieser Teile den Metallkomplex oder das Metallsalz **A** gemäß einem der Ansprüche 1 bis 6 als Katalysator für die Polykondensation von Organopolysiloxanen und das Vernetzungsmittel **D** umfasst, wohingegen der andere Teil von den oben angegebenen Spezies frei ist, und
- auf 100 Gewichtsteile des Polyorganosiloxanöls bzw. der Polyorganosiloxanöle **C,** das bzw. die durch Polykondensation zu einem Elastomer vernetzt werden kann bzw. können,
- 0,001 bis 10 Gewichtsteile Wasser umfasst.

9. Einkomponentige Polyorganosiloxanzusammensetzung, die in Abwesenheit von Feuchtigkeit lagerstabil ist und in Gegenwart von Wasser zu einem Elastomer vernetzt, **dadurch gekennzeichnet, dass** sie:
- mindestens ein vernetzbares lineares Polyorganosiloxan, das funktionalisierte Enden vom Alkoxy-, Oxim-, Acyl- und/oder Enoxy-Typ, vorzugsweise vom Alkoxy-Typ, aufweist,
- einen Füllstoff und
- einen Katalysator für die Polykondensationsreaktion, bei dem es sich um den Metallkomplex oder das Metallsalz **A** gemäß einem der Ansprüche 1 bis 6 handelt,
umfasst.

10. Elastomer, erhalten durch Vernetzung und Härtung des Zweikomponentensystems nach Anspruch 8 oder der Zusammensetzung gemäß einem der Ansprüche 1 bis 7 oder 9.

11. Verwendung eines Metallkomplexes oder eines Metallsalzes **A** gemäß einem der Ansprüche 1 bis 6 als Katalysator für die Polykondensationsreaktion von Organopolysiloxanen.

## Claims

1. Organopolysiloxane composition, **characterized in that** it comprises, on the one hand, a silicone base **B** capable of curing via polycondensation reaction into a silicone elastomer and, on the other hand, a catalytically effective amount of at least one polycondensation catalyst which is a metal complex or salt **A** of formula **(1)** below:
[M (L¹)ᵣ₁ (L²)ᵣ₂(Y)ₓ] **(1)**
in which:
- r1 ≥ 1, r2 ≥ 0 and x ≥ 0;
- the symbol M represents a metal selected from the group constituted by: scandium, ytterbium, copper, silver and bismuth;
- the symbol L¹ represents a ligand which is a sulphonate, preferably perfluoroalkylsulphonate, anion and when r1 ≥ 2, the symbols L¹ possibly being identical or different;
- the symbol L² represents an anionic ligand which is different from L¹ and when r2 ≥ 2, the symbols L² possibly being identical or different; and
- the symbol Y represents a neutral ligand and when x ≥ 2, the symbols Y possibly being identical or different.

2. Organopolysiloxane composition according to Claim 1, **characterized in that** this metal complex or salt **A** of formula **(1')** below:
[M (L¹)ᵣ₁ (L²)ᵣ₂] **(1')**
in which:
- r1 ≥ 1 and r2 ≥ 0;
- the symbol M represents a metal selected from the group constituted by: scandium, ytterbium, copper, silver and bismuth;
- the symbol L¹ represents a ligand which is a sulphonate, preferably perfluoroalkylsulphonate, anion and when r1 ≥ 2, the symbols L¹ possibly being identical or different; and
- the symbol L² represents an anionic ligand which is different from L¹ and when r2 ≥ 2, the symbols L² possibly being identical or different.

3. Organopolysiloxane composition according to any one of the preceding claims, **characterized in that** it comprises, on the one hand, a silicone base **B** capable of curing via polycondensation reaction into a silicone elastomer and, on the other hand, a catalytically effective amount of at least one polycondensation catalyst which is a metal complex or salt **A** chosen from the group constituted by the complexes of formulae **(2)** to **(6)** below:
**(2):** [Sc (L¹)ᵣ₃ (L²) ᵣ₄] ;
where r3 ≥ 1 and r4 ≥ 0 and r3 + r4 = 3;
**(3):** [Yb (L¹)ᵣ₅ (L²) ᵣ₆] ;
where r5 ≥ 1 and r6 ≥ 0 and r5 + r6 = 3;
**(4):** [Cu (L¹)ᵣ₇ (L²) ᵣ₈] ;
where r7 ≥ 1 and r8 ≥ 0 and r7 + r8 = 2;
**(5) :** [Ag(L¹)] ;
**(6):** [Bi (L¹)ᵣ₉ (L²)ᵣ₁₀] ;
where r9 ≥ 1 and r10 ≥ 0 and r9 + r10 = 3; in which:
- the symbol L¹ represents a ligand which is a sulphonate, preferably perfluoroalkylsulphonate, anion and when l₁ ≥ 2, the symbols L¹ possibly being identical or different; and
- the symbol L² represents an anionic ligand which is different from L¹ and when the number of ligands L² ≥ 2, the symbols L² possibly being identical or different.

4. Organopolysiloxane composition according to any one of the preceding claims, **characterized in that** it comprises, on the one hand, a silicone base **B** capable of curing via polycondensation reaction into a silicone elastomer and, on the other hand, a catalytically effective amount of at least one polycondensation catalyst which is a metal complex or salt **A** chosen from the group constituted by the complexes **(7)** to **(11)** below:
**(7):** [Sc(triflate)₃] ;
**(8):** [Yb(triflate)₃] ;
**(9):** [Cu(triflate)₂] ;
**(10):** [Ag(triflate)];
and
**(11) :** [Bi(triflate)₃].

5. Organopolysiloxane composition according to any one of the preceding claims, **characterized in that** L² is an anionic ligand selected from the group constituted by the following anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tetraoxochlorato(1⁻) (CIO₄)⁻, hydroxo (OH)⁻, mercapto (SH)⁻, selanido (SeH)⁻, hyperoxo (O₂)⁻, ozonido (O₃)⁻, hydroxo (OH-), hydrodisulphido (HS₂)⁻, methoxo (CH₃O)⁻, ethoxo (C₂H₅O)⁻, propoxido (C₃H₇O)⁻, methylthio (CH₃S)⁻, ethanethiolato (C₂H₅S)⁻ , 2-chloroethanolato (C₂H₄CIO)⁻, phenoxido (C₆H₅O)⁻, phenylthio (C₆H₅S)⁻, 4-nitrophenolato [C₅H₄(NO₂)O]⁻, formato (HCO₂)⁻ , acetato (CH₃CO₂)⁻, propionato (CH₃CH₂CO₂)⁻ , nitrido (N₃)⁻, cyano (CN)⁻, cyanato (NCO)⁻, thiocyanato (NCS)⁻, selenocyanato (NCSe)⁻, amido (NH₂)⁻, phosphino (PH₂)⁻, chloroazanido (ClHN)⁻, dichloroazanido (Cl₂N)⁻, [methanaminato(1⁻)] (CH₃NH)⁻, diazenido (HN=N)⁻, diazanido (H₂N-NH)⁻, diphosphenido (HP=P)⁻, phosphonito (H₂PO)⁻, phosphinato (H₂PO₂)⁻, carboxylato, enolato, amides, alkylato and arylato.

6. Organopolysiloxane composition according to claim 1, 2 or 3, **characterized in that** L² is an anionic ligand selected from the group constituted by the following anions: acetate, propionate, butyrate, isobutyrate, diethylacetate, benzoate, 2-ethylhexanoate, stearate, methoxide, ethoxide, isopropoxide, tert-butoxide, tert-pentoxide, 8-hydroxyquinolinate, naphthenate, tropolonate and the oxido O²- anion.

7. Composition according to any one of the preceding claims, **characterized in that** it also comprises a catalytically effective amount of at least one polycondensation catalyst which is a metal complex or salt **A** as defined according to any one of Claims 1 to 6 and a silicone base **B** comprising:
- at least one polyorganosiloxane oil **C** capable of crosslinking via polycondensation into an elastomer;
- optionally at least one crosslinking agent **D;**
- optionally at least one adhesion promoter **E;** and
- optionally at least one siliceous, organic and/or non-siliceous mineral filler **F.**

8. Two-component system that is a precursor of the organopolysiloxane composition as defined according to any one of Claims 1 to 7 and that can be vulcanized to a silicone elastomer via polycondensation reactions and **characterized in that** it is in two separate parts **P1** and **P2** intended to be mixed in order to form said composition, and **in that** one of these parts comprises the metal complex or salt **A** as defined according to any one of Claims 1 to 6, as a catalyst for the polycondensation reaction of organopolysiloxanes and the crosslinking agent **D,** whilst the other part is free of the aforementioned species and comprises:
- per 100 parts by weight of the polyorganosiloxane oil(s) **C** capable of crosslinking via polycondensation into an elastomer;
- from 0.001 to 10 part(s) by weight of water.

9. Single-component polyorganosiloxane composition that is stable during storage in the absence of moisture and that crosslinks, in the presence of water, into an elastomer, **characterized in that** it comprises:
- at least one crosslinkable linear polyorganopolysiloxane that has functionalized ends of alkoxy, oxime, acyl and/or enoxy type, preferably alkoxy type;
- a filler; and
- a catalyst of the polycondensation reaction which is the metal complex or salt **A** as defined according to any one of Claims 1 to 6.

10. Elastomer that is obtained by crosslinking and curing of the two-component system according to Claim 8, or of the composition as defined according to any one of Claims 1 to 7 or 9.

11. Use of a metal complex or salt **A** as defined according to any one of Claims 1 to 6 as a catalyst for the polycondensation reaction of organopolysiloxanes.
